(19) Europäisches Patentamt
European Patent Office
Office européen des brevets

(11) EP 0 692 492 B1

(12) **FASCICULE DE BREVET EUROPEEN**

(45) Date de publication et mention de la délivrance du brevet:
**03.12.1997 Bulletin 1997/49**

(51) Int Cl.[6]: **C08C 19/44**, C08K 3/36, B60C 1/00

(21) Numéro de dépôt: **95109517.3**

(22) Date de dépôt: **20.06.1995**

(54) **Compositions élastomères chargées à la silice utilisables pour des enveloppes de pneumatiques**

Für Laufflächen geeignete mit Kieselsäure verstärkte Gummimischungen

Silica-reinforced rubber compositions suitable for treads

(84) Etats contractants désignés:
**AT BE DE ES FR GB IT**

(30) Priorité: **15.07.1994 FR 9408886**

(43) Date de publication de la demande:
**17.01.1996 Bulletin 1996/03**

(73) Titulaire: **COMPAGNIE GENERALE DES ETABLISSEMENTS MICHELIN - MICHELIN & CIE**
**63040 Clermont-Ferrand Cédex (FR)**

(72) Inventeur: **Labauze, Gérard**
**F-63100 Clermont-Ferrand (FR)**

(74) Mandataire: **Hiebel, Robert**
**Michelin & Cie,**
**Service SGD/LG/PI Ladoux**
**63040 Clermont-Ferrand Cedex 01 (FR)**

(56) Documents cités:
**EP-A- 0 299 074** **US-A- 4 185 042**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 692 492 B1

## Description

La présente invention est relative à une composition de caoutchouc à base de polymères diéniques couplés et/ou étoilés comprenant de la silice en tant que charge renforçante, utilisable pour la fabrication d'enveloppes de pneumatiques.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que par exemple des sous-couches, des gommes de calandrage ou de flancs ou des bandes de roulement et obtenir des pneumatiques aux propriétés améliorées, notamment possédant une résistance au roulement réduite.

Pour atteindre un tel objectif de nombreuses solutions ont été proposées consistant notamment à modifier entre autres la nature des polymères et copolymères diéniques en fin de polymérisation au moyen d'agents de couplage ou d'étoilage ou de fonctionnalisation. Toutes ces solutions se sont essentiellement concentrées sur l'utilisation des polymères modifiés avec du noir de carbone comme charge renforçante dans le but d'obtenir une bonne interaction entre le polymère modifié et le noir de carbone car l'usage de charges blanches renforçantes, et de silice notamment, s'est révélé inapproprié en raison du faible niveau de certaines propriétés de telles compositions et par voie de conséquence de certaines propriétés des pneumatiques mettant en oeuvre ces compositions. De surcroît, l'usage de la silice soulève des difficultés de mise en oeuvre dues aux interactions silice/silice qui tendent à l'état cru à provoquer une agglomération des particules de silice avant et même après mélangeage et ainsi à augmenter la consistance des compositions caoutchouteuses, en tout cas à rendre la mise en oeuvre plus difficile que la mise en oeuvre du noir de carbone. A titre d'exemples illustratifs de cet art antérieur, nous pouvons citer le brevet US-A-3-135 716 qui décrit la réaction de polymères diéniques vivants en fin de chaîne avec un agent de couplage organique polyfonctionnel pour obtenir des polymères aux propriétés améliorées. Le brevet US-A-3 281 383 qui décrit à titre d'agents de couplage ou greffage de polymères diéniques vivants des polyépoxydes, polyisocyanates, polyimines, polyaldéhydes, polycétones, polyanhydrides, polyesters, polyhalogénures parmi lesquels des composés polyhalogénés du silicium. Le brevet US-A-3 244 664 qui décrit à titre d'agent de couplage et/ou d'étoilage de polymères diéniques des tétraalcoxysilanes. Le brevet français FR-A-69 24444 qui décrit à titre d'agent d'étoilage des composés comportant soit le groupe -0-C(0)-0-, soit le groupe -0-C(0)-R-C(0)-0- et qui conduit à des polymères diéniques ayant des propriétés de mise en oeuvre et des propriétés à l'état vulcanisé améliorées. Le brevet US-A-4 185 042 décrit des polymères diéniques couplés ou étoilés à l'aide de composés du silicium comprenant un groupe époxyde, l'agent de couplage et/ou d'étoilage étant présent à raison de 0,05 à 4 moles par mole de polymère ou copolymère vivant possédant les propriétés à la fois d'un élastomère et d'un thermoplastique. Il n'y a aucune référence à des mélanges chargés et rien ne permet à l'homme de l'art de penser que de tels polymères pourraient présenter un intérêt pour des compositions comprenant de la silice à titre de charge renforçante.

L'intérêt d'utiliser de la silice à titre de charge renforçante dans des compositions élastomériques est ancien mais l'usage de silice à titre de charge renforçante est resté très limité en raison des inconvénients mentionnés ci-dessus et ce malgré les tentatives faites pour remédier à la déficience des propriétés exhibées par de telles compositions. Ainsi il a été proposé d'utiliser des polymères diéniques fonctionnalisés à la place des polymères non fonctionnalisés. A titre d'exemple d'un tel art antérieur, on peut citer la demande de brevet européen EP-A-0 299 074 qui décrit une composition de caoutchouc diénique chargée à la silice à base d'un polymère diénique fonctionnalisé à l'aide d'un silane ayant un reste alcoxyle non hydrolysable. La demande de brevet européen EP-A-0 447 066 décrit une composition chargée à la silice renfermant un polymère diénique fonctionnalisé à l'aide d'un composé silane halogéné. Malgré l'amélioration des propriétés obtenues avec l'emploi de tels polymères fonctionnalisés, les compositions de silice décrites dans cet art antérieur ne se sont pas révélées utilisables pour constituer des bandes de roulement de pneumatiques car les propriétés exhibées quoique améliorées restent néanmoins insuffisantes par rapport au niveau requis. Cet intérêt pour les compositions renforcées à la silice a été relancé récemment avec la publication de la demande de brevet européen EP-A-0 501 227 qui divulgue une composition de caoutchouc vulcanisable au soufre obtenue par travail thermomécanique d'un copolymère de diène conjugué et d'un composé vinyle aromatique préparé par polymérisation en solution avec 30 à 150 parties en poids pour 100 parties en poids d'élastomère d'une silice précipitée particulière obtenue selon le procédé faisant l'objet de la demande de brevet européen EP-A-0 157 703.

La demanderesse vient de découvrir de manière surprenante que les polymères diéniques couplés et/ou étoilés avec un agent de couplage ou d'étoilage qui est un composé alcoxysilane époxydé permettent de diminuer l'hystérèse d'une composition élastomérique à base desdits polymères couplés et/ou étoilés comprenant de la silice à titre de charge renforçante et d'améliorer en outre d'autres propriétés.

La présente invention a pour objet une composition de caoutchouc à base de polymères couplés et/ou étoilés présentant une hystérèse améliorée.

L'invention concerne également des constituants semi-finis utilisables dans la fabrication de pneumatiques, notamment des bandes de roulement ainsi que de pneumatiques possédant une résistance au roulement réduite selon les revendications 10 et 14.

L'invention concerne une composition de caoutchouc vulcanisable au soufre à base d'un polymère diénique caractérisée en ce qu'elle comprend de la silice à titre de charge renforçante et en ce que le polymère diénique est un polymère couplé et/ou étoilé comportant de 30 % à 100 % de chaînes couplées et/ou étoilées avec un agent de couplage ou d'étoilage répondant à la formule générale I :

$$(Y)_m\text{-}R^1\text{-}Si(OR^2)_{3\text{-}n}R^3n$$

dans laquelle :

Y représente les restes

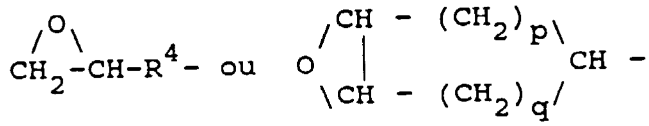

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement.

Parmi les agents de couplage et/ou étoilage répondant à la formule générale I conviennent à titre préférentiel le 2-glycidyloxyéthyl triméthoxysilane, le 3-glycidyloxypropyltriméthoxysilane(GPTSI), le 3-glycidyloxypropyltriéthoxysilane, le 2-(3,4-époxycyclohexyl)-éthyltriméthoxysilane (ECETSI).

Par polymères diéniques on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinyle aromatique ayant de 8 à 20 atomes de carbone. A titre de diènes conjugués conviennent notamment le butadiène-1,3, le 2-méthyl-1,3-butadiène, les 2,3-di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène ou le 2,4-hexadiène.

A titre de composés vinyle aromatique conviennent notamment le styrène, l'ortho-, meta, para-méthylstyrène, le mélange commercial "vinyle-toluène", le para-tertiobutyl-styrène, les méthoxy-styrènes, les chloro-styrènes, le vinyle mésitylène, le divinyle benzène ou le vinyle naphtalène.

Les copolymères peuvent contenir entre 99 % et 20 % en poids d'unités diéniques et de 1 % à 80 % en poids d'unités vinyle aromatiques. Les polymères peuvent avoir toute microstructure qui est fonction des conditions de polymérisation utilisées, notamment de la présence ou non d'un agent modifiant et/ou randomisant et des quantités d'agent modifiant et/ou randomisant employées. Les polymères peuvent être à blocs, statistiques, séquencés, microséquencés et être préparés en dispersion ou en solution.

A titre préférentiel conviennent les polybutadiènes et en particulier ceux ayant une teneur en unités-1,2 comprise entre 4 % et 80 %, les polyisoprènes, les copolymères de butadiène-styrène et en particulier ceux ayant une teneur en styrène comprise entre 5% et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %. Dans le cas de copolymères de butadiène-styrène-isoprène conviennent ceux ayant une teneur en styrène comprise entre 5 et 50 % et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 85%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités

trans-1,4 de la partie isoprénique comprise entre 10 % et 50 %.

Les polymères vivants sont obtenus de manière connue en soi par polymérisation du ou des monomères avec un initiateur de polymérisation. On peut utiliser tout initiateur anionique ou non monofonctionnel connu. Toutefois un initiateur contenant un métal alcalin tel que le lithium ou alcalino-terreux tel que le baryum est utilisé à titre préférentiel. Des composés représentatifs sont les organolithiens aliphatiques tels que l'éthyl-lithium, le n-butyl-lithium (n-BuLi) et l'isobutyl-lithium. Des composés représentatifs contenant du baryum sont ceux décrits par exemple dans les demandes de brevet FR-A- 2 302 311 et FR-A- 2 273 822 et les certificats d'addition FR-A-2 338 953 et FR-A-2 340 958 dont le contenu est incorporé ici. Dans les exemples, le rapport agent/initiateur exprime le rapport molaire agent de couplage sur nombre de sites actifs en polymérisation de l'initiateur.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30° à 90°C. On peut bien entendu également ajouter en fin de polymérisation un agent de transmétallation pour modifier la réactivité de l'extrémité de chaîne vivante.

Les polymères diéniques couplés et/ou étoilés sont obtenus comme connu en soi en laissant réagir le polymère diénique vivant avec l'agent de couplage et/ou d'étoilage. La réaction de couplage et/ou d'étoilage est de préférence réalisée avec une quantité d'agent de couplage ou d'étoilage mise à réagir avec le polymère diénique vivant telle que le rapport molaire agent d'étoilage de formule I sur initiateur de polymérisation actif soit compris entre 0,05 et 1,0. Un exemple d'un procédé de préparation de polymères diéniques couplés et/ou étoilés est décrit dans le brevet US-A- 4 185 042 dont le contenu est incorporé ici. Bien sûr on peut utiliser un ou plusieurs composés répondant à la formule I en tant qu'agent de couplage et/ou d'étoilage. Le polymère couplé et/ou étoilé avant récupération peut être additionné d'agents antioxydants et séparé du milieu réactionnel par des techniques classiques, c'est-à-dire soit par coagulation, soit par entraînement à la vapeur d'eau du solvant, soit par évaporation par quelque moyen que ce soit comme par exemple l'évaporation sous vide puis séché si c'est nécessaire.

Par polymères diéniques couplés et/ou étoilés, on entend des polymères entièrement ou substantiellement couplés et/ou étoilés à l'aide d'au moins un composé répondant à la formule générale I, c'est-à-dire des polymères comportant 30 % à 100 % de chaînes polymériques couplées et/ou étoilées à l'aide d'un composé répondant à la formule générale I. Le couplage et/ou l'étoilage des polymères peut bien sûr avoir été réalisé en une ou plusieurs étapes avec un ou plusieurs composés répondant à la formule générale 1. La réalité de la réaction de couplage et/ou d'étoilage peut être mise en évidence au moyen du saut d'étoilage apparent (SEA) qui est égal au rapport des masses moléculaires du polymère fonctionnalisé/polymère non fonctionnalisé; plus ce rapport est élevé plus il exprime un couplage ou un étoilage important. Les polymères diéniques couplés et/ou étoilés utilisés dans les compositions selon l'invention présentent de préférence un saut d'étoilage apparent égal ou supérieur à 2, mais qui peut descendre jusqu'à 1,20. Les polymères couplés et/ou étoilés peuvent au sens de la présente invention comporter jusqu'à 70 % de chaînes polymériques couplées et/ou étoilées selon l'un quelconque des procédés connus de l'homme de l'art à l'aide d'autres agents de couplage et/ou d'étoilage connus dans l'état de la technique comme par exemple les dérivés d'étain, le carbonate de propylèneglycol et/ou de chaînes fonctionnalisées à l'aide d'un composé répondant à la formule générale I ou à l'aide de tout autre agent de fonctionnalisation connu dans l'état de la technique comme par exemple des dérivés appropriés de la benzophénone, ou de l'étain ou un composé alcoyxysilane halogéné ou non.

De manière imprévisible pour l'homme de l'art, il a été découvert que les polymères diéniques étoilés et/ou greffés confèrent à une composition les mettant en oeuvre et renfermant de la silice à titre de charge renforçante des propriétés améliorées. En tout premier lieu, ils permettent de diminuer l'hystérèse de telles compositions chargées en silice, ce qui rend ces compositions particulièrement utiles pour la fabrication de produits semi-finis utilisables comme constituants de pneumatiques notamment des bandes de roulement, des sous-couches, des gommes de flancs, des gommes de calandrage.

Par ailleurs, il a été découvert que ces polymères diéniques couplés et/ou étoilés confèrent aux compositions non vulcanisées contenant au moins pour partie de la silice à titre de charge renforçante des propriétés de mise en oeuvre améliorées, notamment une extrudabilité ou une aptitude au tirage à l'aide d'une boudineuse améliorées. Il a également été découvert que ces polymères diéniques couplés et/ou étoilés confèrent aux compositions vulcanisées renforcées à l'aide de silice une résistance mécanique et une cohésion mécanique améliorées. En d'autres termes, il a été découvert que ces polymères diéniques couplés et/ou étoilés permettaient de conférer à des compositions contenant de la silice à titre de charge renforçante un compromis de propriétés de mise en oeuvre à cru, de résistance mécanique, de cohésion mécanique et d'hystérèse très satisfaisant permettant l'usage de ces compositions dans la fabrication de pneumatiques possédant une résistance au roulement réduite.

Cet effet bénéfique au niveau des propriétés est obtenu de façon préférable avec toutes les silices précipitées connues de l'homme de l'art présentant une surface BET inférieure ou égale à 450 m2/g, une surface spécifique CTAB

inférieure ou égale à 450 m2/g même si cette amélioration est plus prononcée avec une silice précipitée hautement dispersible. Par silice hautement dispersible, on entend toute silice ayant une aptitude à la désagglomération et à la dispersion dans une matrice polymérique très importante observable par microscopie, électronique ou optique, sur coupes fines. Comme exemples non limitatifs de telles silices hautement dispersibles préférentielles on peut citer celles décrites dans les demandes de brevet européen EP-A-0 157 703 et EP-A-0 520 862 ou la silice Zeosil 1165 MP de la Société Rhône Poulenc ou la silice Perkasil KS 340 de la société Akzo ou la silice Hi-Sil 2000 de la Société PPG.

L'effet bénéfique est obtenu quel que soit l'état physique sous lequel se présente la silice, c'est-à-dire qu'elle se présente sous forme de poudre, de microperles, de granulés, de billes et quelle que soit la surface spécifique de la silice. Lorsqu'on utilise à la fois de la silice et du noir de carbone comme charges renforçantes dans des compositions, des propriétés améliorées sont obtenues tant au niveau des compositions non vulcanisées que des compositions vulcanisées. On peut bien entendu également utiliser des coupages de différentes silices et utiliser d'autres charges blanches.

Comme noirs de carbone, conviennent tous les noirs de carbone, notamment tous les noirs commercialement disponibles ou conventionnellement utilisés dans les pneus et particulièrement dans les bandes de roulement des pneus. La quantité de noir de carbone présente peut varier dans de larges limites étant toutefois entendu que l'amélioration des propriétés sera d'autant plus importante que le taux de silice présent est élevé. La quantité de noir de carbone présente est préférentiellement égale ou inférieure à 200% de la quantité de silice présente dans la composition.

Les polymères couplés et/ou étoilés peuvent être utilisés seuls dans les compositions de caoutchouc ou en coupage avec tout autre élastomère diénique, en particulier avec tout élastomère conventionnellement utilisé dans les bandes de roulement de pneus. Il est toutefois évident que plus la proportion d'élastomère conventionnel présent dans la composition constituant la bande de roulement d'un pneu est importante, moindre sera l'amélioration. C'est pourquoi l'élastomère conventionnel, tel que le caoutchouc naturel, le polybutadiène, le polyisoprène, un copolymère butadiène-styrène ou butadiène-styrène-isoprène peut être présent entre 1 et 70 parties en poids pour 100 parties de polymère couplé et/ou étoilé. Cet élastomère conventionnel peut bien sûr être lui-même un élastomère couplé et/ou étoilé ou encore fonctionnalisé avec un agent de couplage et/ou d'étoilage ou de fonctionnalisation autre que celui répondant à la formule I ou encore un élastomère fonctionnalisé avec un agent de fonctionnalisation répondant à la formule I.

Les compositions conformes à l'invention peuvent également contenir les autres constituants et additifs habituellement utilisés dans les mélanges de caoutchouc comme des plastifiants, pigments, antioxydants, du soufre, des accélérateurs de vulcanisation, des huiles d'extension, un ou des agents de couplage ou de liaison de silice, et/ou un ou des agents de recouvrement de la silice tels que des alcoxysilanes, polyols ou des amines.

L'invention est illustrée par les exemples qui ne sauraient constituer une limitation de la portée de l'invention.

Dans les exemples, les propriétés des compositions sont évaluées comme suit :

- Modules d'allongement à 300 % (MA 300), 100 % (MA100) et 10 % (MA 10) : mesures effectuées selon la norme ISO 37

- Indices de cassage Scott : mesurés à 20°C et à 100°C,
  Force rupture (FR) en MPa
  Allongement à la rupture (AR) en %

- Pertes hystérétiques (PH) : mesurées par rebond à 60°C

- Propriétés dynamiques en cisaillement :
  Mesures en fonction de la déformation : effectuées à 10 Hertz avec une déformation crête-crête allant de 0,15 % à 50 %. La non linéarité exprimée est la différence de module de cisaillement entre 0.15 % et 50 % de déformation en MPa ($\Delta G$). L'hystérèse est exprimée par la mesure de tg$\delta$ à 7 % de déformation.

Mesures en fonction de la température : effectuées à 10 Hertz sous une contrainte répétitive de 20 N/cm2 avec un balayage en température de - 80°C à 100°C. L'hystérèse est exprimée par la mesure de tg$\delta$ à 0°C et à 60°C selon la norme ASTM D2231-71 (réapprouvée en 1977).

Pour tous les exemples la viscosité inhérente (dl/g) est mesurée à 25°C en solution à 1 g/l dans le toluène.

<u>Exemple 1</u>

Cet exemple a pour but de décrire un mode d'exécution en discontinu du procédé de préparation de polymères diéniques couplés et/ou étoilés permettant d'obtenir des compositions aux propriétés améliorées selon l'invention.

Dans cet exemple on réalise 2 essais identiques. Dans l'un des essais on utilise un agent de couplage et/ou

d'étoilage tandis que dans l'autre on utilise du méthanol en fin de polymérisation. Dans un réacteur de 10 litres sous pression d'azote, on introduit 6,35 l de toluène à titre de solvant puis 500 g de 1,3-butadiène et enfin 250 ppm de THF à titre d'agent promoteur de liaisons vinyliques. On ajoute ensuite du n-BuLi en quantité appropriée pour neutraliser les impuretés présentes dans le milieu réactionnel après quoi on ajoute 0,00333 mole de n-BuLi représentant la quantité d'initiateur actif pour initier la polymérisation. Celle-ci est effectuée à 60°C durant 48 minutes et le taux de conversion mesuré est de 100 %. Dans le réacteur contenant le polybutadiène ayant une extrémité vivante C-lithium, on ajoute le GPTSI* en quantité appropriée pour l'essai 2 et le méthanol pour l'essai 1. La réaction de couplage et/ou d'étoilage est effectuée à 60°C. Après 2 minutes on ajoute 0,5 partie de 2,2'-méthylène bis (4-méthyl-6-tertiobutyl phénol) pour cent parties d'élastomère en tant qu'agent antioxydant. Le polybutadiène obtenu pour chacun des essais est coagulé dans le méthanol puis séché à 50°C sous pression réduite durant 36 heures.

Pour chacun des polymères, on mesure la viscosité inhérente finale, la viscosité Mooney (1 + 4 à 100°C), la masse moléculaire en nombre (Mn) par osmométrie et le saut d'étoilage apparent.

Les résultats sont consignés dans le tableau I :

TABLEAU I

| Essais | Agent/Initiateur | Viscosité Inhérente | Viscosité Mooney | $Mnx10^{-3}$ | SEA |
|---|---|---|---|---|---|
| 1 | 0 | 1,97 | 25 | 135 | 1,0 |
| 2 | 0,5 | 2,57 | 82 | 210 | 1,6 |

Exemple 2

Cet exemple a pour but de décrire un mode d'exécution en continu du procédé de préparation de polymères diéniques couplés et/ou étoilés permettant d'obtenir selon l'invention des compositions aux propriétés améliorées.

Dans un réacteur de 32 litres de capacité utile avec agitateur du type turbine, on introduit en continu du toluène, du butadiène, du styrène et du THF dans un rapport massique 100 : 10 : 4,3 : 0,3 et une solution de 530 micromoles de n-BuLi actif pour cent grammes de monomères. Les débits de ces différentes solutions sont calculés pour avoir un temps moyen de séjour de 45 minutes sous forte agitation. La température est maintenue constante à 60°C. En sortie de réacteur la conversion mesurée est de 88 %. Le copolymère SBR contient 26 % de styrène incorporé et une teneur de 41 % de liaisons-1,2 pour la partie butadiénique.

En sortie de réacteur est rajouté l'agent de couplage et/ou d'étoilage. On réalise 4 essais avec des quantités variables de GPTSI. La réaction de couplage et/ou d'étoilage est effectuée à 60°C. Après 2 minutes on ajoute 0,8 partie pour cent parties de copolymère de 2,2'-méthylène bis(4-méthyl-6-tertiobutylphénol) et 0,2 partie de N-(1,3-diméthylbutyl)-N'-phényl-p-phénylènediamine en tant qu'antioxydants. Le copolymère est récupéré puis soumis à l'opération classique de stripping à la vapeur d'eau puis séché à l'étuve à 50°C.

Les résultats sont consignés dans le tableau II.

TABLEAU II

| Essais | Agent/initiateur | Viscosité Inhérente | Viscosité Mooney | $Mnx10^{-3}$ | SEA |
|---|---|---|---|---|---|
| 3 | 4,13 | 2,28 | 84 | 196 | 1,11 |
| 4 | 1,65 | 2,33 | 86 | 207 | 1,18 |
| 5 | 0,83 | 2,43 | 91 | 220 | 1,25 |
| 6 | 0,20 | 2,62 | 109 | 240 | 1,36 |
| 7 | 0,15 | 2,78 | 119 | 245 | 1,39 |

Exemple 3

Cet exemple a pour but de décrire un mode d'exécution en continu d'un copolymère butadiène-styrène-isoprène couplé et/ou étoilé permettant d'obtenir selon l'invention une composition aux propriétés améliorées.

Dans un réacteur de 32 litres de capacité utile avec agitateur du type turbine, on introduit en continu du toluène, du butadiène, du styrène, de l'isoprène et du THF dans un rapport massique 100 : 3,0 : 4,0 : 4,1 : 0,06 et une solution de 10 micromoles de n-BuLi actif pour 100 g de monomères. Les débits de ces différentes solutions sont calculés pour avoir un temps de séjour de 45 minutes. La température est maintenue constante à 75°C. En sortie de réacteur, la conversion mesurée est de 81 %. Le terpolymère SBIR contient 25 % de styrène incorporé, 33 % de butadiène incorporé

(*)GPTSI vendu par la société Hüls sous la dénomination commerciale DYNASYLAN GLYMO.

possédant une teneur en liaisons -1,2 de 25 % tandis que la teneur en liaisons-3,4 pour la partie isoprénique est de 20 %.

En sortie de réacteur, on ajoute le GPTSI et la réaction de couplage et/ou d'étoilage est effectuée à 60°C. Dans le cadre de l'essai témoin 9, du méthanol est ajouté à la place du GPTSI, en une quantité telle qu'on ait un rapport méthanol/initiateur égal à 2.

Après 2 minutes on ajoute 0,8 partie pour cent parties de terpolymère de 2,2'méthylène bis(4-méthyl-6-tertiobutylphénol) et 0,2 partie de N-(1,3-diméthyl-butyl)-N'-phényl-p-phenylènediamine en tant qu'antioxydants. Le terpolymère est récupéré puis soumis à l'opération classique de stripping à la vapeur d'eau puis séché à l'étuve à 50°C. Les viscosités inhérentes sont mesurées avant l'opération de stripping.

Les résultats sont consignés dans le tableau III.

TABLEAU III

| Essais | Agent de fonctionnalisation | Agent/Initiateur | Viscosité Inhérente | Viscosité Mooney | Mnx$10^{-3}$ | SEA |
|---|---|---|---|---|---|---|
| 8 | GPTSI | 0,20 | 2,72 | 92 | 255 | 1,34 |
| 9 | - | - | 2,16 | 54 | 190 | 1 |

<u>Exemple 4</u>

Cet exemple a pour but de décrire un mode d'exécution en continu de polymères diéniques couplés et/ou étoilés permettant d'obtenir des compositions selon l'invention aux propriétés améliorées en vue de les comparer à des compositions ayant la même formulation mais à base de polymères couplés et/ou étoilés avec d'autres agents de couplage ou d'étoilage, toutes les compositions ayant substantiellement la même viscosité Mooney à l'état non vulcanisé.

On répète le mode opératoire de l'exemple 2 si ce n'est qu'on utilise respectivement le GPTSI, le 2-(3,4-époxycyclohexyl)-éthyltriméthoxysilane (ECETSI), le tétraméthoxysilane (TMSI), le carbonate de propylène glycol (CPG) comme agents de couplage ou d'étoilage et qu'on utilise une quantité d'initiateur actif telle que la valeur de la viscosité Mooney du polymère couplé et/ou étoilé soit de 70 ± 3. Le polymère vivant possède une teneur en liaisons-1,2 de 41 % pour la partie butadiènique, une teneur en liaisons trans-1,4 de 44 % et une teneur en styrène incorporé de 26 %. On prépare également un SBR stoppé au méthanol, désigné SBRT et un SBR fonctionnalisé avec du propyltriméthoxysilane (PTSI) désigné SBRB.

Le taux de fonctionnalisation du SBRB est déterminé par dosage $^1H$ RMN. L'échantillon analysé est récupéré par plusieurs cycles de coagulation dans le méthanol et dissolution à l'aide de disulfure de carbone afin d'éliminer la présence de toute trace de PTSI résiduel, c'est-à-dire qui ne serait pas lié au polymère. L'échantillon est ensuite séché en étuve sous vide à 60°C pendant 24 h afin d'éliminer toute trace de solvant. Le signal singulet, des protons du motif $Si(OCH_3)_2$ correspondant aux extrémités de chaîne fonctionnalisées, se trouve à 3.32 ppm. A partir de ce spectre, le calcul permet de déterminer que le polymère contient 0,034 motif de $Si(OCH_3)_2$ pour 100 motifs de monomère, ce qui correspond à 5.0 millimoles de motifs $Si(OCH_3)_2$ par kilogramme de polymère. La masse moléculaire du polymère non modifié est de 184 000 g/mole. Les valeurs ainsi obtenues permettent de déterminer le taux de fonctionnalisation (rapport nombre de moles d'extrémités de chaînes $Si(OCH_3)_2$ sur nombre de moles de polymère avant fonctionnalisation) qui est de 0,92.

Les résultats sont consignés dans le tableau IV

TABLEAU IV

| Essai | Polymère | Agent de couplage/étoilage | Agent de couplage d'étoilage/n BuLi | Mooney | SEA |
|---|---|---|---|---|---|
| 10 | SBRE | GPTSI | 0,20 | 70 | 1,38 |
| 11 | SBRE' | ECETSI | 0,35 | 69 | 1,25 |
| 12 | SBRF | TMSI | 0,40 | 70 | 1,39 |
| 13 | SBRG | CPG | 0,40 | 71 | 1,32 |
| 14 | SBRB | PTSI | 1,5 | 72 | 1,03 |
| 15 | SBRT | MEOH | 1,5 | 69 | 1 |

Ces quatre SBR couplés et/ou étoilés sont mis en oeuvre par un travail thermomécanique en deux étapes qui durent respectivement 5 et 4 minutes avec une vitesse moyenne des palettes de 45 t/mn, jusqu'à atteindre une température maximale de tombée de 160°C suivies d'une étape de finition effectuée à 30°C sous la formulation suivante

dans laquelle toutes les parties sont exprimées en poids :

| | |
|---|---|
| Elastomère | 100 |
| Silice (*) | 75 |
| Huile aromatique (d) | 37,5 |
| Agent de liaison (**) | 6 |
| Oxyde de zinc | 2,5 |
| Acide stéarique | 1,5 |
| Antioxydant (a) | 1,9 |
| paraffine (b) | 1,5 |
| Soufre | 1,1 |
| Sulfénamide (c) | 2 |
| Diphénylguanidine | 1,5 |

(*) la silice est une silice hautement dispersible sous forme de microperles commercialisée par la Société Rhône Poulenc sous la dénomination commerciale Zeosil 1165 MP.

(**) organosilane polysulfuré commercialisé par la Société Degussa sous la dénomination SI 69

(a) : antioxydant : N-(1,3-diméthyl-butyl)-N'-phényl-p-phénylènediamine

(b) : paraffine : mélange de cires macro et microcristallines

(c) : sulfénamide : N-cyclohexyl-2-benzothiazyl sulfénamide

(d) : Huile aromatique : ENERFLEX 65 commercialisée par la Société BP

On compare les 4 compositions précédentes avec une composition identique mettant respectivement en oeuvre le SBRB fonctionnalisé au PTSI et le SBRT stoppé au méthanol.

La vulcanisation est effectuée à 150°C pendant 40 minutes. On compare entre elles les propriétés de ces 6 compositions tant à l'état non vulcanisé qu'à l'état vulcanisé.

Les résultats sont consignés dans le tableau IVA

TABLEAU IVA

| Compositions | SBRE | SBRE' | SBRF | SBRG | SBRB | SBRT |
|---|---|---|---|---|---|---|
| Propriétés classiques de caoutchouterie | | | | | | |
| Mooney | 68 | 73 | 65 | 72 | 92 | 76 |
| Propriétés à l'état vulcanisé | | | | | | |
| dureté | | | | | | |
| Shore | 66 | 66 | 66 | 66 | 66 | 66 |
| MA10 | 5.00 | 5.00 | 5.20 | 5.30 | 5.10 | 5.40 |
| MA100 | 1.65 | 1.68 | 1.75 | 1.70 | 1.70 | 1.75 |
| MA300 | 1.90 | 1.95 | 1.90 | 1.80 | 1.99 | 1.78 |
| MA300/MA100 | 1.15 | 1.16 | 1.08 | 1.05 | 1.17 | 1.01 |
| Indices de cassage Scott à-- | | | | | | |
| 20°C FR | 21.5 | 21.5 | 22 | 23 | 22.5 | 22 |
| 20°C AR % | 600 | 620 | 600 | 650 | 630 | 650 |
| 100°C FR | 8.5 | 9 | 9 | 9.2 | 8.9 | 8.5 |
| 100°CAR% | 400 | 420 | 450 | 450 | 420 | 450 |
| PH à 60°C * | 30 | 29 | 31.5 | 32 | 27 | 32 |
| Propriétés dynamiques en fonction de la déformation | | | | | | |
| ΔG à 23°C | 3.30 | 3.30 | 3.80 | 4.20 | 3.30 | 4.50 |
| tgδ à 23°C | 0.31 | 0.30 | 0.36 | 0.38 | 0.31 | 0.39 |
| Propriétés dynamiques en fonction de la température | | | | | | |
| tgδ à 0°C | 0.54 | 0.54 | 0.53 | 0.52 | 0.54 | 0.52 |
| tgδ à 60°C | 0.155 | 0.155 | 0.160 | 0.175 | 0.150 | 0.180 |

(*) la déformation pour cette perte hystérétique est de 34 %.

On constate que les compositions vulcanisées SBRE et E' mettant en oeuvre les polymères couplés et/ou étoilés possèdent une propriété d'hystérèse améliorée non seulement par rapport à celle exhibée par la composition SBRT, mais sensiblement améliorée par rapport à celle des compositions SBRF et G mettant en oeuvre d'autres agents d'étoilage et/ou de couplage dont le TMSI, permettant d'atteindre un niveau comparable à celle exhibée par la composition SBRB, c'est-à-dire un niveau comparable à celle exhibée par un polymère fonctionnalisé.

Par ailleurs, on constate que les compositions SBRE et E' possèdent des propriétés de mise en oeuvre, telles que extrudabilité et tirage sur boudineuse, nettement supérieures à celles de la composition SBRB fonctionnalisé et du même niveau que celles exhibées par les 2 autres compositions SBRF et G mettant en oeuvre des polymères étoilés.

En outre, les compositions SBRE et E' possèdent à l'état vulcanisé un renforcement (rapport MA300/MA100) supérieur à celui des compositions SBRF et G et proche de celle de la composition SBRB.

Exemple 5

Cet exemple a pour but de montrer que les propriétés améliorées sont obtenues quelle que soit la surface spécifique de la silice et quelle que soit sa forme de présentation.

Dans cet exemple on réalise deux séries d'essais, l'une mettant en oeuvre sous forme de microperles une silice qui possède une surface spécifique BET de 85 m2/g vendue sous la dénomination commerciale Zeosil 85 MP par la Société Rhône Poulenc, l'autre mettant en oeuvre une silice précipitée se présentant sous forme de granulés et commercialisée par la société Degussa sous la dénomination commerciale Ultrasil VN3 et qui possède une surface spécifique CTAB de 170 m2/g.

Pour les deux séries d'essais, avec la même formulation que celle décrite à l'exemple 4, on réalise quatre compositions dont deux avec les copolymères couplés et/ou étoilés E et G préparés à l'exemple 4, la troisième composition étant réalisée avec le SBRB fonctionnalisé avec du PTSI et la quatrième composition étant réalisée avec le SBRT stoppé avec du méthanol et servant de composition témoin.

Les résultats sont consignés dans le tableau V.

TABLEAU V

| | ZEOSIL 85 MP | | | | ULTRASIL VN3 | | | |
|---|---|---|---|---|---|---|---|---|
| Compositions | SBRE | SBRB | SBRT | SBRG | SBRE | SBRB | SBRT | SBRG |
| Mooney | 53 | 72 | 57 | 57 | 63 | 92 | 71 | 71 |
| Propriétés à l'état vulcanisé | | | | | | | | |
| dureté Shore | 62 | 61 | 63 | 63 | 64 | 64 | 66 | 65 |
| MA10 | 3.90 | 3.80 | 4.00 | 4.00 | 4.90 | 4.90 | 5.20 | 5.10 |
| MA100 | 1.85 | 1.85 | 1.90 | 1.90 | 1.75 | 1.80 | 1.85 | 1.80 |
| MA300 | 2.78 | 2.86 | 2.75 | 2.75 | 1.85 | 2.01 | 1.87 | 1.85 |
| MA300 | 1.50 | 1.55 | 1.45 | 1.45 | 1.06 | 1.12 | 1.01 | 1.03 |
| MA100 | | | | | | | | |
| Indices de cassage Scott à | | | | | | | | |
| 20°CFR | 15 | 15.5 | 15 | 15 | 17.5 | 16.5 | 16 | 16.5 |
| 20°C AR % | 430 | 400 | 450 | 450 | 550 | 500 | 600 | 600 |
| 100°C FR | 5.5 | 5.1 | 4.8 | 4.8 | 6.5 | 6.5 | 6 | 6.5 |
| 100°C AR% | 230 | 200 | 260 | 260 | 330 | 300 | 330 | 350 |
| PH à 60°C* | 17 | 15 | 19 | 18 | 27.5 | 24 | 29 | 29 |
| Propriétés dynamiques en fonction de la déformation | | | | | | | | |
| ΔG à 23°C | 1.40 | 1.20 | 1.60 | 1.55 | 2.00 | 1.70 | 2.70 | 2.60 |
| tgδ à 23°C | 0.17 | 0.16 | 0.20 | 0.19 | 0.27 | 0.23 | 0.30 | 0.29 |
| Propriétés dynamiques en fonction de la température | | | | | | | | |
| tgδ 0°C | 0.30 | 0.30 | 0.30 | 0.30 | 0.42 | 0.42 | 0.42 | 0.42 |
| tgδ 60°C | 0.080 | 0.070 | 0.100 | 0.095 | 0.125 | 0.118 | 0.140 | 0.140 |

(*) la déformation pour cette perte hystérétique est respectivement de 37 % et 34 % pour les silices Zeosil 85 MP et Ultrasil VN3.

On constate que quelle que soit la forme de présentation, microperles ou granulés, de la silice et quelle que soit sa surface spécifique, les compositions mettant en oeuvre les copolymères étoilés et/ou couplés E possèdent globalement des propriétés hystérétiques à fortes et à faibles déformations très sensiblement améliorées par rapport à celles exhibées par les autres compositions G et T et assez proches de celles exhibées par le SBRB fonctionnalisé. En outre, les copolymères couplés et/ou étoilés E possèdent des propriétés de mise en oeuvre améliorées à l'état non vulcanisé par rapport à celles exhibées par la composition SBRB.

Exemple 6

Cet exemple a pour but de montrer que les compositions mettant en oeuvre un polymère couplé et/ou étoilé avec un agent de couplage et/ou d'étoilage répondant à la formule générale I possèdent des propriétés améliorées lorsque la charge renforçante n'est pas exclusivement constituée par de la silice mais par exemple par un coupage noir/silice.

Dans cet exemple, on utilise la formulation suivante tout en répétant le mode opératoire de l'exemple 4.

| | |
|---|---|
| Elastomère | 100 |
| Silice (*) | 40 |
| Noir N234 | 40 |
| Huile aromatique (d) | 37.5 |
| Agent de liaison (**) | 3.2 |
| Oxyde de zinc | 2.5 |

(*), (**), (a), (b), (c), (d) : identiques à ceux utilisés dans l'exemple 4.

(suite)

| | |
|---|---|
| Acide stéarique | 1.5 |
| Antioxydant (a) | 1.9 |
| Paraffine (b) | 1.5 |
| Soufre | 1.1 |
| Sulfénamide (c) | 2 |
| Diphénylguanidine | 0,75 |

Les résultats sont consignés dans le tableau VI

TABLEAU VI

| Compositions | SBRT | SBRE | SBRG | SBRB |
|---|---|---|---|---|
| Propriétés à l'état cru | | | | |
| Mooney | 72 | 64 | 68 | 86 |
| Propriétés à l'état vulcanisé | | | | |
| Dureté Shore | 64 | 63 | 64 | 63 |
| MA10 | 4.55 | 4.25 | 4.45 | 4.10 |
| MA100 | 1.50 | 1.52 | 1.48 | 1.51 |
| MA300 | 1.74 | 1.82 | 1.74 | 1.89 |
| MA300/MA100 | 1.16 | 1.20 | 1.18 | 1.24 |
| Indices de cassage Scott à | | | | |
| 20°C FR | 19 | 21 | 20 | 20.5 |
| 20°C AR % | 620 | 630 | 630 | 610 |
| 100°C FR | 9.5 | 9.5 | 10 | 9.9 |
| 100°C AR % | 500 | 500 | 500 | 450 |
| PH à 60°C* | 39 | 35 | 38 | 33.5 |
| Propriétés dynamiques en fonction de la déformation | | | | |
| ΔG à 23°C | 6.30 | 5.00 | 6.00 | 4.40 |
| tg δ à 23°C | 0.43 | 0.40 | 0.43 | 0.38 |
| Propriétés dynamiques en fonction de la température | | | | |
| tg δ à 0°C | 0.67 | 0.69 | 0.67 | 0.70 |
| tg δ à 60°C | 0.220 | 0.210 | 0.220 | 0.200 |

**(*) la déformation pour cette perte hystérétique est de 35 %.**

On constate que les propriétés de la composition comprenant le polymère couplé et/ou étoilé à l'aide du composé répondant à la formule générale I sont, dans le cas d'un coupage noir-silice, améliorées par rapport à celles des 2 compositions SBRG et SBRT au niveau du vulcanisat en ce qui concerne le renforcement mécanique et la perte hystérétique aux faibles et fortes déformations et très proches de celles exhibées par la composition SBRB.

**Revendications**

1. Composition de caoutchouc vulcanisable au soufre à base d'un polymère diénique couplé et/ou étoilé caractérisée en ce qu'elle comprend de la silice à titre de charge renforçante et en ce que le polymère diénique est un polymère couplé et/ou étoilé comportant de 30 % à 100 % de chaînes couplées et/ou étoilées à l'aide d'un agent répondant à la formule générale :

$$(Y)_m\text{-}R^1\text{-}Si(OR^2)_{3\text{-}n}\text{-}R^3n$$

dans laquelle :

Y représente les restes

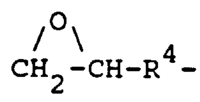 ou 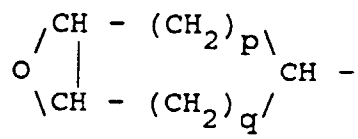

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4, étant entendu que la somme p + q doit représenter un nombre entier compris entre 2 et 5 inclusivement.

2. Composition selon la revendication 1, caractérisée en ce que l'agent de couplage et/ou d'étoilage est choisi parmi le 3-glycidyloxypropyltriméthoxysilane et le 2-(3,4-époxycylohexl)-éthyltriméthoxysilane.

3. Composition selon l'une quelconque des revendications 1 et 2, caractérisée en ce que la silice est une silice de précipitation présentant une surface BET inférieure ou égale à 450 m2/g, une surface spécifique CTAB inférieure ou égale à 450 m2/g.

4. Composition selon la revendication 3, caractérisée en ce que la silice est une silice hautement dispersible se présentant sous forme de poudre, microperles, billes, granulés.

5. Composition selon l'une quelconque des revendications 1 à 3, caractérisée en ce que le polymère diénique couplé et/ou étoilé est choisi dans le groupe constitué par le polybutadiène, le copolymère butadiène-styrène ou butadiène-styrène-isoprène.

6. Composition selon l'une quelconque des revendications 1 à 5, caractérisée en ce qu'elle comprend de 1 à 70 parties en poids d'au moins un autre élastomère diénique choisi dans le groupe constitué par le caoutchouc naturel, le polybutadiène, le polyisoprène, le butadiène-styrène, le butadiène-styrène-isoprène.

7. Composition selon la revendication 6, caractérisée en ce que l'élastomère diénique est un élastomère couplé et/ou étoilé et/ou fonctionnalisé.

8. Composition selon l'une quelconque des revendications 1 à 7, caractérisée en ce qu'elle comporte en outre du noir de carbone.

9. Composition selon la revendication 8, caractérisée en ce que la quantité de noir de carbone est ≤ à 200 % par rapport à la quantité de silice présente.

**10.** Bande de roulement de pneumatique à base d'un polymère diénique couplé/ou étoilé, caractérisée en ce qu'elle comprend 10 à 100 parties en poids d'une composition comprenant de la silice à titre de charge renforçante et un polymère couplé et/ou étoilé comportant de 30 % à 100 % de chaînes couplées et/ou étoilées à l'aide d'un agent répondant à la formule générale :

$$(Y)_m\text{-}R^1\text{-}Si(OR^2)_{3\text{-}n}\text{-}R^3n$$

dans laquelle :

Y représente les restes

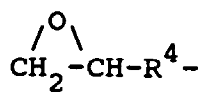 ou 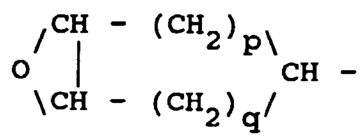

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement.

**11.** Bande de roulement selon la revendication 10, caractérisée l'agent de couplage et/ou d'étoilage est choisi parmi le 3-glycidyloxypropyltriméthoxysilane et le 2(3,4-époxycylohexyl)-éthyltriméthoxysilane.

**12.** Bande de roulement selon l'une quelconque des revendications 10 et 11, caractérisée en ce que la silice est une silice de précipitation présentant une surface BET inférieure ou égale à 450 m2/g, une surface spécifique CTAB inférieure ou égale à 450 m2/g et de préférence hautement dispersible.

**13.** Bande de roulement selon la revendication 12, caractérisée en ce que le polymère diénique fonctionnalisé est choisi dans le groupe constitué par le polybutadiène, le copolymère butadiène-styrène ou butadiène-styrène-isoprène.

**14.** Pneumatique ayant une résistance au roulement réduite, caractérisé en ce qu'il possède une bande de roulement comprenant 10 à 100 parties en poids d'une composition comprenant de la silice à titre de charge renforçante et un polymère couplé et/ou étoilé à l'aide d'un agent répondant à la formule générale :

$$(Y)_m\text{-}R^1\text{-}Si(OR^2)_{3\text{-}n}\text{-}R^3n$$

dans laquelle :

Y représente les restes

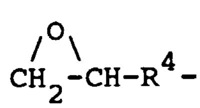 ou 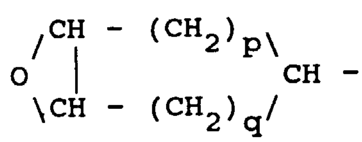

$R^1$ représente un reste alcoyle, cycloalcoyle ou aryle ayant de 1 à 10 atomes de carbone,
$R^2$ représente un reste alcoyle, aryle, cycloalcoyle, alkaryle, aralkyle ayant de 1 à 12 atomes de carbone,
$R^3$ représente un reste alcoyle, aryle, alkaryle ayant de 1 à 12 atomes de carbone,
$R^4$ représente un reste hydrocarboné ayant de 1 à 6 atomes de carbone et pouvant comprendre un ou plusieurs atomes d'oxygène dans la chaîne hydrocarbonée,
n est un nombre entier choisi parmi les valeurs 0, 1,
m est un nombre entier choisi parmi les valeurs 1 ou 2,
p et q sont des nombres entiers choisis parmi les valeurs 0, 1, 2, 3 ou 4 étant entendu que la somme p + q doit représenter un nombre entier compris entre 2 et 5 inclusivement.

## Patentansprüche

1. Mit Schwefel vulkanisierbare Kautschukzusammensetzung auf der Basis eines gekuppelten und/oder gepfropften Dienpolymers,
dadurch gekennzeichnet, daß

   sie Kieselsäure als verstärkenden Füllstoff enthält und das Dienpolymer ein gekuppeltes und/oder gepfropftes Polymer ist, das 30 bis 100 % Ketten aufweist, die mit einem Kupplungs- und/oder Pfropfungsmittel der allgemeinen Formel

$$(Y)_m\text{-}R^1\text{-}Si(OR^2)_{3-n}\text{-}R^3{}_n$$

   gekuppelt und/oder gepfropft sind, in der bedeuten:

   Y die Gruppen

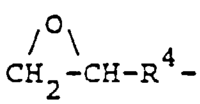
oder
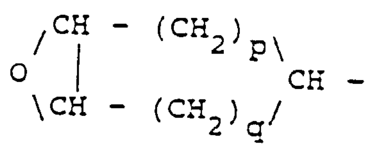

   $R^1$ eine Alkylgruppe, Cycloalkylgruppe oder Arylgruppe mit 1 bis 10 Kohlenstoffatomen,
   $R^2$ eine Alkylgruppe, Arylgruppe, Cycloalkylgruppe, Alkylarylgruppe oder Aralkylgruppe mit 1 bis 12 Kohlenstoffatomen,
   $R^3$ eine Alkylgruppe, Arylgruppe oder Alkylarylgruppe mit 1 bis 12 Kohlenstoffatomen,
   $R^4$ eine Kohlenwasserstoffgruppe mit 1 bis 6 Kohlenstoffatomen, die in der Kohlenstoffkette ein oder mehrere Sauerstoffatome aufweisen kann,

   n 0 oder 1,
   m 1 oder 2

   und

   p und q Zahlen, die unter den Werten 0, 1, 2, 3 und 4 ausgewählt sind,

   mit der Maßgabe, daß die Summe p + q eine ganze Zahl im Bereich von 2 bis 5 darstellt, wobei die Grenzen eingeschlossen sind.

2. Zusammensetzung nach Anspruch 1, dadurch gekennzeichnet, daß das Kupplungs- und/oder Pfropfungsmittel unter 3-Glycidyloxypropyltrimethoxysilan und 2-(3,4-Epoxycyclohexyl)-ethyltrimethoxysilan ausgewählt ist.

3. Zusammensetzung nach Anspruch 1 oder 2, dadurch gekennzeichnet, daß die Kieselsäure eine durch Fällung hergestellte Kieselsäure ist, die eine spezifische Oberfläche nach BET ≤ 450 $m^2$/g und eine mit CTAB bestimmte

spezifische Oberfläche ≤ 450 $m^2/g$ aufweist.

4. Zusammensetzung nach Anspruch 3, dadurch gekennzeichnet, daß die Kieselsäure eine hochdispergierbare Kieselsäure ist, die in Form eines Pulvers, in Form von Mikroperlen, in Form von Kügelchen oder als Granulat vorliegt.

5. Zusammensetzung nach einem der Ansprüche 1 bis 3, dadurch gekennzeichnet, daß das gekuppelte und/oder gepfropfte Dienpolymer unter Polybutadien, Butadien-Styrol-Copolymeren und Butadien-Styrol-Isopren-Copolymeren ausgewählt ist.

6. Zusammensetzung nach einem der Ansprüche 1 bis 5, dadurch gekennzeichnet, daß sie 1 bis 70 Gew.-Teile mindestens eines weiteren Dienelastomers enthält, das unter Naturkautschuk, Polybutadien, Polyisopren, Butadien-Styrol-Copolymeren und Butadien-Styrol-Isopren-Copolymeren ausgewählt ist.

7. Zusammensetzung nach Anspruch 6, dadurch gekennzeichnet, daß das Dienelastomer ein gekuppeltes und/oder gepfropftes und/oder funktionalisiertes Elastomer ist.

8. Zusammensetzung nach einem der Ansprüche 1 bis 7, dadurch gekennzeichnet, daß sie ferner Ruß enthält.

9. Zusammensetzung nach Anspruch 8, dadurch gekennzeichnet, daß die Menge an Ruß ≤ 200 %, bezogen auf die Menge der vorliegenden Kieselsäure, beträgt.

10. Luftreifen-Laufstreifen auf der Basis eines gekuppelten und/oder gepfropften Dienpolymers, dadurch gekennzeichnet, daß er 10 bis 100 Gew.-Teile einer Zusammensetzung enthält, die Kieselsäure als verstärkenden Füllstoff sowie ein gekuppeltes und/oder gepfropftes Polymer enthält, das 30 bis 100 % Ketten aufweist, die mit einem Kupplungs- und/oder Pfropfungsmittel der allgemeinen Formel

$$(Y)_m-R^1-Si(OR^2)_{3-n}-R^3{}_n$$

gekuppelt und/oder gepfropft sind, in der bedeuten:

Y die Gruppen

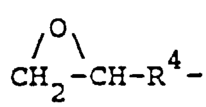 oder 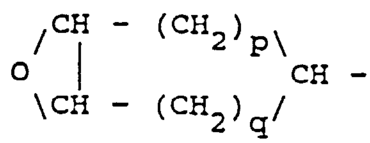

$R^1$ eine Alkylgruppe, Cycloalkylgruppe oder Arylgruppe mit 1 bis 10 Kohlenstoffatomen,
$R^2$ eine Alkylgruppe, Arylgruppe, Cycloalkylgruppe, Alkylarylgruppe oder Aralkylgruppe mit 1 bis 12 Kohlenstoffatomen,
$R^3$ eine Alkylgruppe, Arylgruppe oder Alkylarylgruppe mit 1 bis 12 Kohlenstoffatomen,
$R^4$ eine Kohlenwasserstoffgruppe mit 1 bis 6 Kohlenstoffatomen, die in der Kohlenstoffkette ein oder mehrere Sauerstoffatome aufweisen kann,

n 0 oder 1,
m 1 oder 2

und

p und q Zahlen, die unter den Werten 0, 1, 2, 3 und 4 ausgewählt sind,

mit der Maßgabe, daß die Summe p + q eine ganze Zahl im Bereich von 2 bis 5 darstellt, wobei die Grenzen eingeschlossen sind.

11. Laufstreifen nach Anspruch 10, dadurch gekennzeichnet, daß das Kupplungs- und/oder Verzweigungsmittel und

3Glycidyloxypropyltrimethoxysilan und 2-(3,4-Epoxycyclohexyl)-ethyltrimethoxysilan ausgewählt ist.

**12.** Laufstreifen nach Anspruch 10 oder 11, dadurch gekennzeichnet, daß die Kieselsäure eine durch Fällung hergestellte Kieselsäure ist, die eine spezifische Oberfläche nach BET ≤ 450 $m^2/g$ und eine mit CTAB bestimmte spezifische Oberfläche ≤ 450 $m^2/g$ aufweist und vorzugsweise hochdispergierbar ist.

**13.** Laufstreifen nach Anspruch 12, dadurch gekennzeichnet, daß das funktionalisierte Dienpolymer unter Polybutadien, Butadien-Styrol-Copolymeren und Butadien-Styrol-Isopren-Copolymeren ausgewählt ist.

**14.** Luftreifen mit verringertem Rollwiderstand, dadurch gekennzeichnet, daß er einen Laufstreifen besitzt, der 10 bis 100 Gew.-Teile einer Zusammensetzung enthält, die Kieselsäure als verstärkenden Füllstoff sowie ein gekuppeltes und/oder gepfropftes Polymer enthält, das mit einem Kupplungs- und/oder Pfropfungsmittel der allgemeinen Formel

$$(Y)_m\text{-}R^1\text{-}Si(OR^2)_{3-n}\text{-}R^3{}_n$$

gekuppelt bzw. gepfropft ist, in der bedeuten:

Y die Gruppen

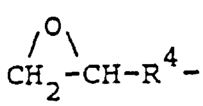 oder 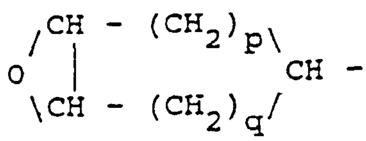

$R^1$ eine Alkylgruppe, Cycloalkylgruppe oder Arylgruppe mit 1 bis 10 Kohlenstoffatomen,
$R^2$ eine Alkylgruppe, Arylgruppe, Cycloalkylgruppe, Alkylarylgruppe oder Aralkylgruppe mit 1 bis 12 Kohlenstoffatomen,
$R^3$ eine Alkylgruppe, Arylgruppe oder Alkylarylgruppe mit 1 bis 12 Kohlenstoffatomen,
$R^4$ eine Kohlenwasserstoffgruppe mit 1 bis 6 Kohlenstoffatomen, die in der Kohlenstoffkette ein oder mehrere Sauerstoffatome aufweisen kann,

n 0 oder 1,
m 1 oder 2

und

p und q Zahlen, die unter den Werten 0, 1, 2, 3 und 4 ausgewählt sind,

mit der Maßgabe, daß die Summe p + q eine ganze Zahl im Bereich von 2 bis 5 darstellt, wobei die Grenzen eingeschlossen sind.

## Claims

**1.** A composition of rubber able to be vulcanised with sulphur based on a linked and/or star-shaped dienic polymer, characterised in that it comprises silica as reinforcing charge and in that the dienic polymer is a linked and/or star-shaped polymer comprising 30% to 100% linked and/or star-shaped chains by means of an agent in accordance with the general formula:

$$(Y)_m\text{-}R^1\text{-}Si(OR^2)_{3-n}\text{-}R^3n$$

in which:

Y represents the radicals

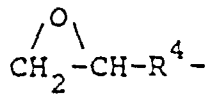

or

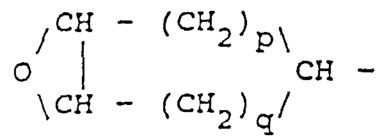

$R^1$ represents an alcoyl, cycloalcoyl or aryl radical having from 1 to 10 carbon atoms,
$R^2$ represents an alcoyl, aryl, cycloalcoyl, alkaryl, aralkyl radical having from 1 to 12 carbon atoms,
$R^3$ represents an alcoyl, aryl, alkaryl radical having l to 12 carbon atoms,
$R^4$ represents a hydrocarbonous radical having from 1 to 6 carbon atoms and being able to comprise one or more oxygen atoms in the hydrocarbonous chain,
n is a whole number selected from the values 0, 1,
m is a whole number selected from the values 1 or 2,
p and q are whole numbers selected from the values 0, 1, 2, 3 or 4, it being understood that the sum p + q must represent a whole number comprised between 2 and 5 inclusively.

**2.** A composition according to Claim 1, characterised in that the linking and/or star-forming agent is selected from 3-glycidyloxypropyltrimethoxysilane and 2-(3,4-epoxycyclohexyl)-ethyltrimethoxysilane.

**3.** A composition according to any one of Claims 1 and 2, characterised in that the silica is a precipitation silica having an area BET smaller than or equal to 450 m2/g, a specific area CTAB smaller than or equal to 450 m2/g.

**4.** A composition according to Claim 3, characterised in that the silica is a highly dispersible silica present in the form of powder, micro-pearls, balls, granules.

**5.** A composition according to any one of Claims 1 to 3, characterised in that the linked and/or star-shaped dienic polymer is selected from the group constituted by polybutadiene, the copolymer butadiene-styrene or butadiene-styrene-isoprene.

**6.** A composition according to any one of Claims 1 to 5, characterised in that it comprises from 1 to 70 parts by weight of at least one other dienic elastomer selected from the group constituted by natural rubber, polybutadiene, polyisoprene, butadiene-styrene, butadiene-styrene-isoprene.

**7.** A composition according to Claim 6, characterised in that the dienic elastomer is a linked and/or star-shaped and/or functionalisd elastomer.

**8.** A composition according to any one of Claims 1 to 7, characterised in that it comprises, in addition, carbon black.

**9.** A composition according to Claim 8, characterised in that the quantity of carbon black is ≤ 200% with respect to the quantity of silica present.

**10.** A tyre tread based on a linked and/or star-shaped dienic polymer, characterised in that it comprises 10 to 100 parts by weight of a composition comprising silica as reinforcing charge and a linked and/or star-shaped polymer comprising 30% to 100% chains linked and/or star-shaped by means of an agent in accordance with the general formula:

$$(Y)_m\text{-}R^1\text{-}Si(OR^2)_{3-n}\text{-}R^3n$$

in which:

Y represents the radicals

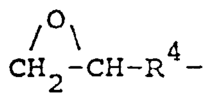 or 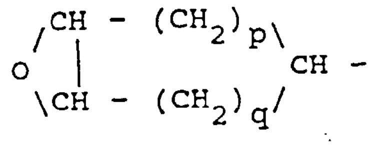

$R^1$ represents an alcoyl, cycloalcoyl or aryl radical having 1 to 10 carbon atoms,
$R^2$ represents an alcoyl, aryl, cycloalcoyl, alkaryl, aralkyl radical having 1 to 12 carbon atoms,
$R^3$ represents an alcoyl, aryl, alkaryl radical having 1 to 12 carbon atoms,
$R^4$ represents a hydrocarbonous radical having from 1 to 6 carbon atoms and being able to comprise one or more oxygen atoms in the hydrocarbonous chain,
n is a whole number selected from the values 0, 1,
m is a whole number selected from the values 1 or 2,
p and q are whole numbers selected from the values 0, 1, 2, 3 or 4, it being understood that the sum p + q must represent a whole number comprised between 2 and 5 inclusively.

**11.** A tread according to Claim 10, characterised in that the linking and/or star-forming agent is selected from 3-glycidyloxypropyltrimethoxysilane and 2(3,4-epoxycyclohexyl)-ethyltrimethoxysilane.

**12.** A tread according to any one of Claims 10 and 11, characterised in that the silica is a precipitation silica having an area BET smaller than or equal to 450 m2/g, a specific area CTAB smaller than or equal to 450 m2/g and preferably highly dispersible.

**13.** A tread according to Claim 12, characterised in that the functionalised dienic polymer is selected from the group constituted by polybutadiene, the copolymer butadiene-styrene or butadiene-styrene-isoprene.

**14.** A tyre having a reduced resistance to rolling, characterised in that it has a tread comprising 10 to 100 parts by weight of a composition comprising silica as reinforcing charge and a linked and/or star-shaped polymer by means of an agent in accordance with the general formula:

$$(Y)_m\text{-}R^1Si(OR^2)_{3-n}R^3n$$

in which:

Y represents the radicals

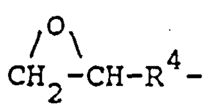 or 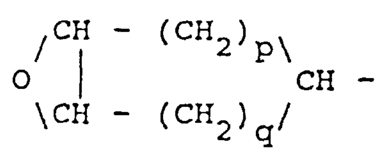

$R^1$ represents an alcoyl, cycloalcoyl or aryl radical having 1 to 10 carbon atoms,
$R^2$ represents an alcoyl, aryl, cycloalcoyl, alkaryl, aralkyl radical having 1 to 12 carbon atoms,
$R^3$ represents an alcoyl, aryl, alkaryl radical having 1 to 12 carbon atoms,
$R^4$ represents a hydrocarbonous radical having 1 to 6 carbon atoms and able to comprise one or more oxygen atoms in the hydrocarbonous chain,
n is a whole number selected from the values 0, 1,
m is a whole number selected from the values 1 or 2,
p and q are whole numbers selected from the values 0, 1, 2, 3 or 4, it being understood that the sum p + q must represent a whole number comprised between 2 and 5 inclusively.